# EUROPEAN PATENT APPLICATION

(11) **EP 4 455 946 A1**
(43) Date of publication of application: **30.10.2024**
(21) Application number: 23315112.5
(22) Date of filing: 26.04.2023
(51) Int. Cl.: G06N 3/082, G06N 3/0464, G06N 3/048

(54) **METHOD FOR SECURING A TRAINED NEURAL NETWORK AGAINST ADVERSARIAL ATTACKS**

(71) Applicant: THALES DIS FRANCE SAS, 92190 Meudon (FR)
(72) Inventor: TEGLIA, Yannick, 13720 Belcodène (FR); LE ROUX, Quentin, 92190 Meudon (FR); BOURBAO, Eric, 83330 Le Beausset (FR)
(74) Representative: Bricks, Amélie

(57) **Abstract**

The present invention relates to a method for securing a trained neural network against adversarial attacks in a computer system, wherein said neural network comprises an input layer, hidden layers and an output layer whose parameters are subject to training and is defined by structural elements of the neural network, comprising functions and structural parameters, which are not subject to training,
the method comprising :
-programming the computer system with the trained neural network,
-presenting, by the computer system, a test sample to the trained neural network,
-selecting a value, for said test sample, of at least one of said structural elements based on input or output values of a layer of the trained network,
-updating said trained neural network by applying said selected value of at least one of said structural elements to the trained neural network,
- evaluating an output of said updated trained neural network for said test sample.

## Description

The present invention relates, generally, to the protection of neural networks against attacks, and, more particularly, against adversarial attacks.

### BACKGROUND OF THE INVENTION

Neural networks have become an increasingly valuable tool for addressing classification problems such as image recognition, pattern recognition, or voice recognition. Such neural networks may for example be used for biometric verification. Accurate classification would correctly predict the class an input most likely belongs, such as authenticating persons correctly based on a face picture; inaccurate classification can cause both false positives, such as interpreting an imposter as being the person being authenticated, and false negatives, such as falsely interpreting a person as being an imposter.

Neural networks are subject to adversarial attacks, which consist in crafting a malicious input for an already trained model such that the model is tricked into providing a wrongful answer. Such attacks may for example be used by an attacker to be fraudulently authenticated as a legitimate user and to access confidential data or locations to which he normally has no access rights.

Such attacks are all the more powerful that the attacker does not even need to tamper with the model. A surrogate model mimicking the behavior of the model to be attacked is sufficient to produce the needed malicious input for performing the attack.

Consequently, there is a need for neural networks defeating such adversarial attacks while remaining efficient.

### SUMMARY

For this purpose and according to a first aspect, this invention therefore relates to a method for securing a trained neural network against adversarial attacks in a computer system, wherein said neural network comprises an input layer, hidden layers and an output layer whose parameters are subject to training, and is defined by structural elements of the neural network, comprising functions and structural parameters, which are not subject to training,
the method comprising :
- programming the computer system with the trained neural network,
- presenting, by the computer system, a test sample to the trained neural network,
- selecting a value, for said test sample, of at least one of said structural elements based on input or output values of a layer of the trained network,
- updating said trained neural network by applying said selected value of at least one of said structural element to the trained neural network,
- evaluating an output of said updated trained neural network for said test sample.

Such a method enables to make the neural network dynamic, depending on the input data it processes, which prevents an attacker from crafting a malicious input able to fool the neural network.

Selecting a value of at least one of said structural elements may comprise :
- generating a selection value by applying a function exhibiting an avalanche effect to said input or output values of a layer of the trained network,
- selecting a value of at least one of said structural elements based on at least one bit of said selection value.

Said function exhibiting an avalanche effect may be a cryptographic hash function or a cryptographic encryption function.

By doing so, even a small change of the input value will lead to a change in approximately half of the bits of the output value of the function exhibiting an avalanche effect.

The method according to the first aspect may comprise generating said trained network by:
- initializing said neural network with random weight values,
- training said neural network using a plurality of training samples,
wherein for each training sample, a value of at least one of said structural elements is selected based on input or output values of a layer of the trained network.

The neural network may be a convolutional neural network.

In a first embodiment wherein said neural network comprises a pooling layer combining together outputs of several neurons of a previous layer by applying to said outputs a pooling function among a plurality of pooling functions, selecting a value of at least one of said structural elements comprises selecting said pooling function of said pooling layer among said plurality of pooling functions.

Said plurality of pooling functions may comprise an average pooling method, a max pooling method and a MODE pooling method.

Said value of at least one of said structural elements may be selected based on input values to said input layer of the trained neural network.

In the first embodiment, said pooling function may also be selected among said plurality of pooling functions based on output values of a layer preceding the pooling layer in said trained neural network.

In a second embodiment wherein said neural network comprises applying an activation function to at least one node of said neural network, selecting a value of at least one of said structural elements may comprise selecting said activation function among a plurality of activation functions.

Said plurality of activation functions may comprise: ReLu, SeLu, TanH, Sigmoid.

In a third embodiment wherein said neural network comprises a layer applying at least one dropout function, selecting a value of at least one of said structural elements may comprise setting a value to a probability of said dropout function canceling at least one input to said layer

In a fourth embodiment wherein said neural network comprises applying at least one batch normalization function, selecting a value of at least one of said structural elements may comprise selecting said normalization function among a plurality of normalization functions.

Said plurality of normalization functions may comprise: L₀ norm, L₁ norm, L₂ norm and L_{∞} norm.

In a fifth embodiment wherein said test sample is an input image comprising a plurality of channels, selecting a value of at least one of said structural elements may comprise selecting the weight for each channel of the test sample.

According to a second aspect, this invention therefore relates also to a computer system programmed with a trained neural network comprising an input layer, hidden layers and an output layer whose parameters are subject to training, and defined by structural elements of the neural network, comprising functions and structural parameters, which are not subject to training, said computer system comprising :
- a processor,
- an input/output interface connected to the processor to acquire test samples and to provide the test samples to the processor,
- at least one memory connected to the processor, configured for storing said trained neural network and including instructions executable by the processor, the instructions comprising:
   ∘ presenting a test sample to the trained neural network,
   ∘ selecting, for said test sample, a value of at least one of said structural elements based on input or output values of a layer of the trained network,
   ∘ updating said trained neural network by applying said selected value of at least one of said structural elements to the trained neural network,
   ∘ evaluating an output of said updated trained neural network for said test sample. .

According to a third aspect, this invention relates to a computer program product directly loadable into the memory of at least one computer, comprising software code instructions for performing the steps of the method according to the first aspect of the invention when said product is run on the computer.

To the accomplishment of the foregoing and related ends, one or more embodiments comprise the features hereinafter fully described and particularly pointed out in the claims.

### BRIEF DESCRIPTION OF THE DRAWINGS

FIGURE 1 is a schematic illustration of a neural network according to an embodiment of the present invention;
FIGURE 2a is a schematic illustration of convolutional neural network layers according to an embodiment of the present invention;
FIGURE 2b is a schematic illustration of an example of a 3*3 pooling over some 4*4 hidden layer;
FIGURE 3 is an example illustrating schematically a computer system according to an embodiment of the present invention;
FIGURE 4 is a schematic illustration of a method for securing a trained neural network against adversarial attacks according to an embodiment of the present invention;
FIGURE 5 is a schematic illustration of the selection of a pooling function according to an embodiment of the present invention;
FIGURE 6 is a schematic illustration of an example of dynamic neural network according to the invention;
FIGURE 7 is a schematic illustration of the accuracy achieved by the present invention;
FIGURE 8 shows how the method according to the invention is efficient for protecting against adversarial attacks.

### DETAILED DESCRIPTION OF THE INVENTION

The invention provides a method for securing a trained neural network against adversarial attacks.

In the rest of the description, the word "model" may be used as a substitute to "neural network".

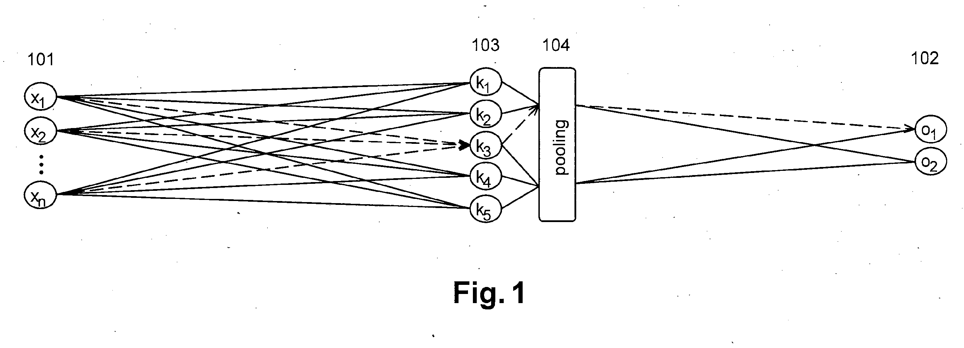

Such a Neural Network may for example be a Convolutional Neural Network (CNN) or Multi Layer Perceptron (MLP). As shown on **Figure 1****,** it includes at least an input layer 101 to which input samples can be provided. It also includes an output layer 102 which provides an output when an input sample is provides to the input layer of the model. In between, such a model may include a plurality of hidden layers of neurons 103 with their parameters. The parameters of the output layer and the hidden layers are subject to training. Such a neural network is also defined by structural elements comprising functions and structural parameters which are not subject to training. These structural elements define how the model is built and what functions are performed in the layers of the model. As an example, a plurality of functions may be applied at least one node of the neural network among: an activation function, a dropout function or a batch normalization function.

Moreover, such a model may include one or more pooling layers 104, each pooling layer combining together the outputs of several neurons of the previous layer by applying to said outputs a pooling function. A pooling layer may therefore be used for performing dimensionality reduction from one layer to another layer of the model.

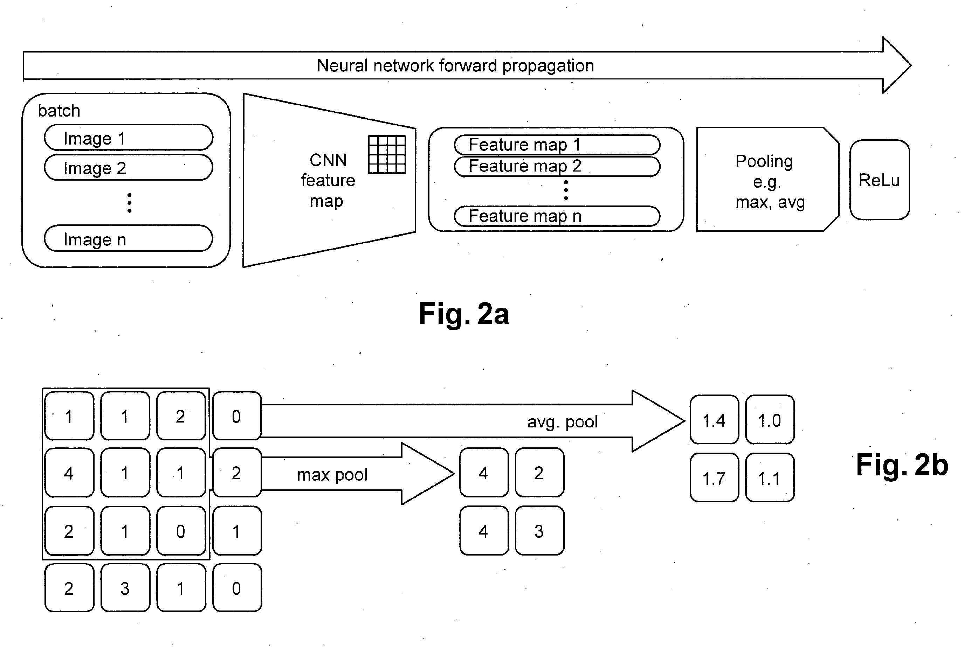

As shown on **Figure 2a****,** in the case of a CNN, a convolutional layer produces feature maps from a batch of input images. A pooling layer is used to reduce the dimension of the feature maps generated by the convolutional layer before passing it to the next convolutional layer. An example is given on **Figure 2b** which shows the result of applying a 3x3 pooling to a 4×4 feature map using as pooling function a maximizing or averaging function.

When the model comprises such a pooling layer, the pooling function to be used at the pooling layer is a structural element defining the model. The pooling function of each pooling layer may be chosen among a plurality of pooling functions comprising for example an average pooling method (outputting the mean value of the inputs), a max pooling method (outputting the largest value among the inputs), a MODE pooling method (outputting the more frequent value among the inputs).

In order to defeat adversarial attacks, the main idea of the invention is to make the neural network dynamic by making the choice of one or more of the structural elements of the model dependent on the data provided to the input layer of the network. By doing so, if an attacker tries to craft an attack test sample inducing a wrong result when submitted to the neural network, if at least one structural element of this neural network depends on the sample provided at its input, the network will structurally change for each of the attacker's tentative attack test samples, rendering the whole adversarial attack generation process harder if not impossible - thus defeating possible adversarial attacks.

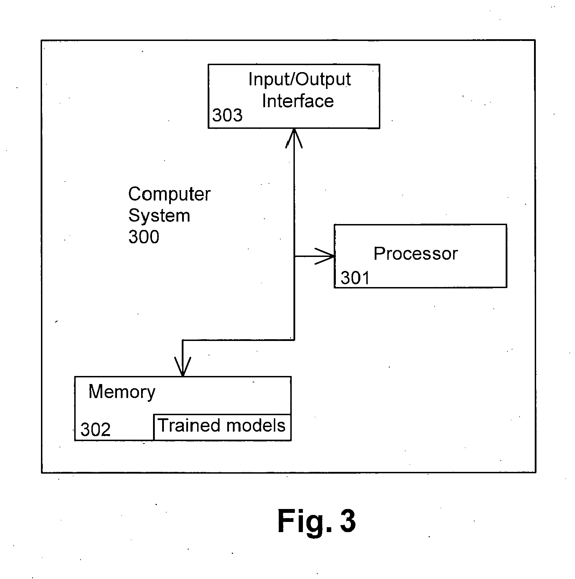

**Figure 3** is a high-level architecture diagram illustrating a possible architecture for a computer system 300 performing the steps of the method according to the invention. The computer system 300, includes a processor 301, which may be a microprocessor, a graphics processing unit, or any processing unit suitable for executing the steps of the method described below.

The processor 301 is connected, for example, via a bus, to a memory 302. The memory 302 may be a non-volatile memory (NVM) such as a flash memory or an erasable programmable read only memory (EPROM). The memory 302 stores the trained or to be trained model, including its parameters and hyper-parameters such as weights associated with the neurons that make up a neural network and that are adjusted during training of the neural network.

The computer system 300 further includes an input/output interface 303 for receiving input, such as training samples or test samples and to provide them to the processor.

The method according to the invention comprises two mains phases.

The first phase is a training phase. Such a training makes the weights of the neurons of the network evolve throughout the training and produces a trained neural network able to achieve its task with an acceptable accuracy. Input data submitted as input to the neural network during the training phase are called training samples in the rest of the description.

The second phase is a test phase of the trained neural network produced by the training phase. It includes both testing of the neural network per se by the neural network owner, and subsequent use of the neural network by users. Input data submitted as input to the neural network during the testing phase are called testing samples in the rest of the description.

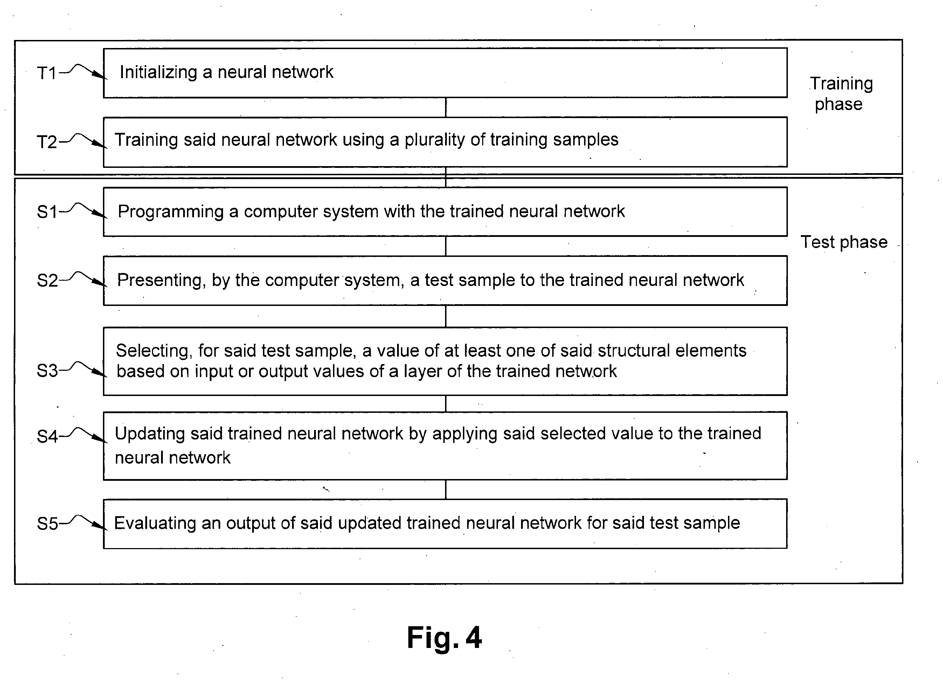

**Figure 4** is a flow-diagram illustrating steps of a method according to the invention for generating a trained neural network and then protecting it against adversarial attacks.

At a first training step T1, the computer system 300 initializes the neural network described above with random weight values.

At a second training step T2, the computer system 300 trains the neural network using a plurality of training samples and produces the trained neural network.

In a first embodiment, during this second training step, each structural element has a fixed value throughout all the training, set at the first training step T1, when the parameters of the neural network are defined.

In a second embodiment, during this second training step, the setting of at least one of said structural elements of the neural network is already dynamic. In this embodiment, for each training sample, a value of at least one of said structural elements is selected based on input or output values of a layer of the trained model. A pooling function may for example be selected based on the value of the training sample provided as input to the input layer of the model. Alternatively, a pooling function may be selected among the plurality of pooling functions based on output values of a layer preceding the pooling layer in the neural network.

The following paragraphs describe the steps of the testing phase.

At a first testing step S1, the computer system 300 is programmed with the trained neural network produced by the second training step T2. At the end of this step, the computer system is ready to assess the answer of the trained neural network to any testing sample provided to the input layer of the neural network.

At a second testing step S2, the computer system presents a test sample to the trained neural network.

At a third testing step S3, for evaluating an output of said model for said test sample, the computer system selects, for the presented test sample, a value of at least one of said structural elements based on input or output values of a layer of the trained model. As described previously for the second training step T2, said value of at least one of said structural elements may for example be selected based on the value of the testing sample provided as input to the input layer of the model. Alternatively, said value of at least one of said structural elements may be selected based on output values of a layer preceding in the trained neural network the layer at which the structural element is applied. For example, a pooling function may be selected based on the output values of the neurons connected to the pooling layer.

At a fourth testing step S4, the computer system updates the trained neural network by applying the value of at least one of said structural elements selected at the third testing step S3 to the trained neural network. For example, the computer system updates the trained neural network by applying to the neurons of a particular layer an activation function selected at the third testing step S3.

The third and fourth testing steps may be performed repeatedly for several structural elements, involved in different layers of the neural network.

At a fifth testing step S5, the computer system evaluates the output of the updated trained neural network for the test sample presented to the input layer at the second testing step S2.

The selection of a value of at least one of said structural elements at the second training step T2 and the third testing step S3 may comprise:
- generating a selection value by applying a function exhibiting an avalanche effect to said input or output values of a layer of the trained network,
- selecting a value of at least one of said structural elements based on at least one bit of said selection value.

The function exhibiting an avalanche effect may for example be a cryptographic hash function or a cryptographic encryption function.

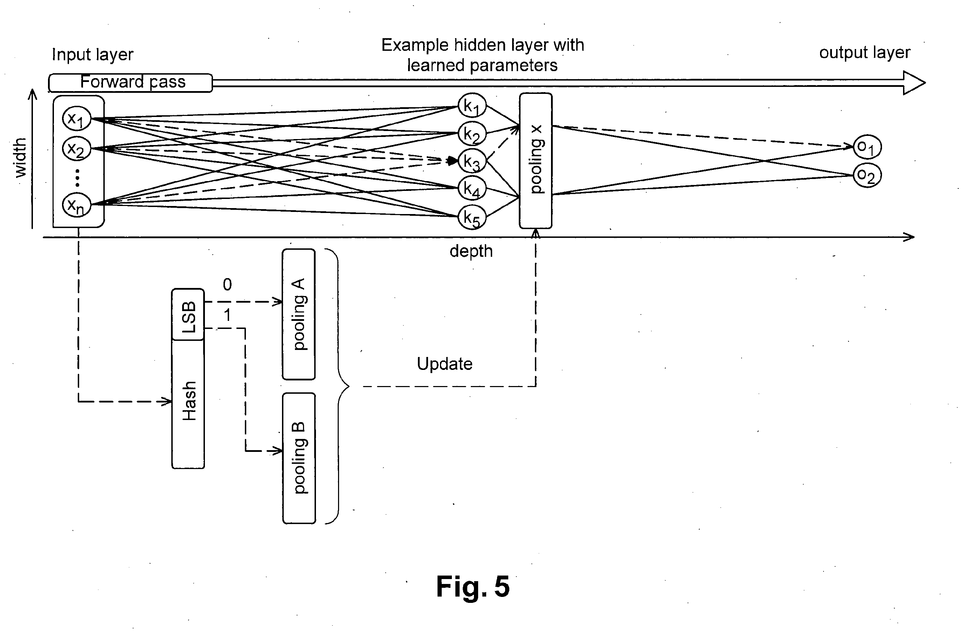

As an example shown on **Figure 5****,** the selection of a pooling function based on input or output values of a layer at the second training step T2 and the third testing step S3 may be performed by:
- generating a cryptographic hash of these input or output values,
- selecting said pooling function among said plurality of pooling functions based on at least one bit (e.g. the least significant bit or LSB) of said hash.

The number of bits to be taken into account for selecting a value of at least one of said structural elements may depend on the number of possible values for a structural element, such that the number of bits taken into account codes, in binary, more values that the number of possible values. Selecting n bits of an output of a function exhibiting an avalanche effect can for example be used to dynamically select among 2*ⁿ* possible values.

Such a way of selecting a value of a structural element ensures a change of choice of the structural element for almost any change of the testing sample provided to the input layer. Indeed, modifying a bit of the input of the function exhibiting an avalanche effect yields a probability of ½ of modifying each bit of its output.

When the neural network comprises one or more pooling layers, selecting a value of at least one of said structural elements at the third testing step S3 may comprise selecting the pooling function of a pooling layer among a plurality of pooling functions.

When an activation function is applied to at least one node of the neural network, selecting a value of at least one of said structural elements at the third testing step S3 may also comprise selecting this activation function among a plurality of activation functions such as ReLu, SeLu, TanH and Sigmoid functions.

When the neural network comprises a layer applying at least one dropout function canceling at least one input of a given layer, selecting a value of at least one of said structural elements at the third testing step may comprise setting a value to the probability of such a cancelation by the dropout function. Different inputs may be canceled with different probabilities. Therefore, the probability of canceling each input may be considered as a different structural element of the neural network.

When a batch normalization function is applied in the neural network, selecting a value of at least one of said structural elements at the third testing step may comprise selecting this normalization function among a plurality of normalization functions such as L0 norm, L1 norm, L2 norm and L∞ norm, where, for two arrays of elements x and x '
- L0 norm measures the number of mismatched elements between x and x ',
- L1 norm measures the sum of the absolute values of the differences between x and x',
- L2 norm measures the standard Euclidean distance between x and x ',
- L∞ norm measures the maximum difference between two elements xi of x and x 'i of x' with the same index i in the two arrays.

When the test sample is an input image comprising a plurality of channels selecting a value of at least one of said structural elements at the third testing step may comprise selecting a weight for each channel of the test sample in the neural network. Each value from a channel of the input image will then be multiplied by the weight associated to this channel when provided to the neural network. In order to select such weights, a given value of some bits of a selection value outputted by a function exhibiting an avalanche effect may correspond to a predefined combination of weights for the channels of the test sample. As an example if the test sample has three channels and 4 bits from the selection value are used to set weights for these three channels, a value '0000' of the selection value bits may be associated to weights 0.1, 0.3, 0.7; a value '0001' of the selection value bits may be associated to weights 0.1, 0.8, 0.2 and so on associating a new combination of weights to each possible value of these 4 bits of the selection value.

At the third testing step, the different ways of selecting a value of at least one of said structural elements may be combined. When a selection value is generated using a function exhibiting an avalanche effect, some bits of the selection value may be used for selecting a pooling function; other bits of the same selection value may be used for selecting an activation function; other bits of the same selection value may be used for selecting a probability of cancelation by a dropout function; other bits of the same selection value may be used for selecting a normalization function; other bits of the same selection value may be used for selecting weights for the channels of the test sample... The matching between bit values of the selection value and values selected for various structural elements may be implemented as one or more Look-Up Tables (LUT).

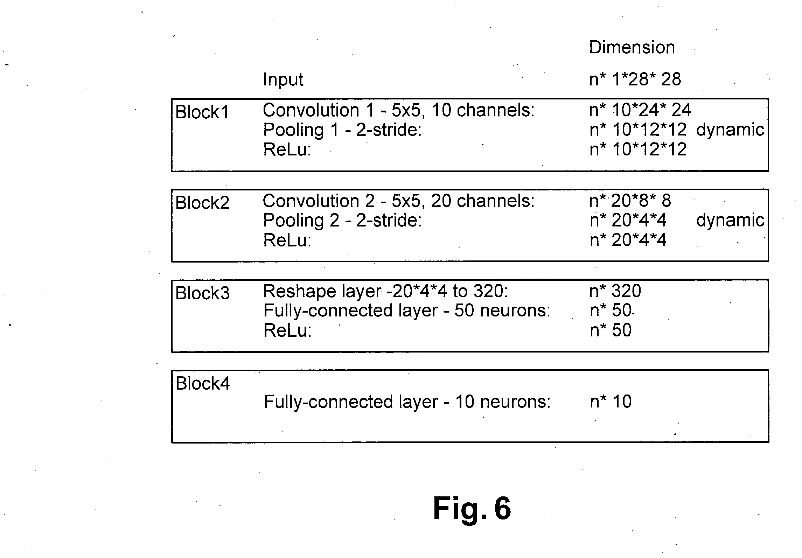

**Figure 6** shows an example of dynamic neural network according to the invention. It has :
- A first convolution layer, used as input layer, taking as input 28x28 pixels images, convoluted with 10 5x5 pixels features,
- A first pooling layer using a stride of 2,
- A first ReLU activation function,
- A second convolution layer convoluting with 20 5x5 pixels features,
- A second pooling layer using a stride of 2,
- A second ReLU activation function,
- Subsequent layers (3+1 ReLU) for making the model converge to an output layer of 10 neurons.

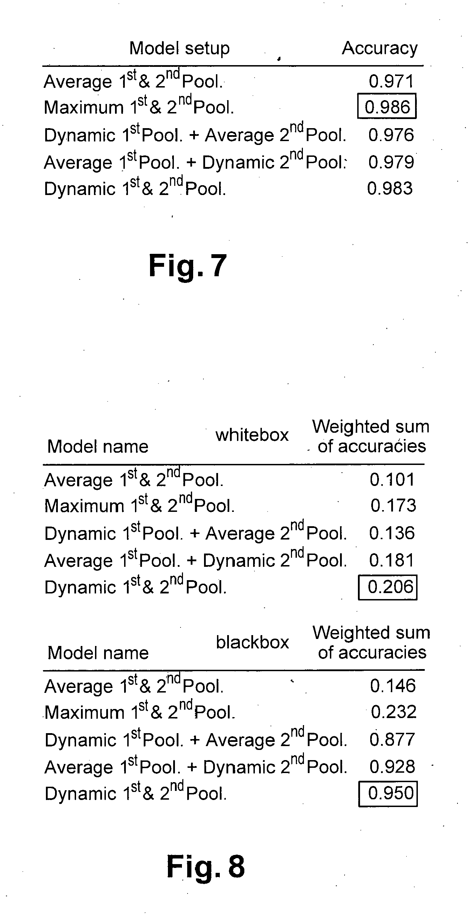

The table of **Figure 7** shows the accuracy achieved by such a model, using for training 30 epochs of 124 images, and for testing 30 epochs of 64 images, depending on how the pooling functions of the first and second pooling layers are selected. Pooling functions selected according to the invention are identified as "dynamic" and selected between average and maximization functions. Other pooling functions are statically defined. This table shows that the accuracy of the model remains high despite making the pooling functions variable both during training and testing.

The table of **Figure 8** shows how the method according to the invention is efficient for protecting against adversarial attacks when applied to the model of Figure 6. A score corresponding to the average accuracy of the model weighted by an attack budget is computed for each case. It shows that selecting dynamically the pooling function of both pooling layers yields the highest score, both in the case of a whitebox attack such as fast gradient sign method, and in the case of a blackbox attack such as Natural Evolutionary Strategies.

Thus, the method according to the invention successfully defeats adversarial attacks while preserving the accuracy of the neural network.

According to a second aspect, the invention relates to computer system described here before and programmed with a trained neural network comprising an input layer, hidden layers and an output layer whose parameters are subject to training, and defined by structural elements of the neural network, comprising functions and structural parameters, which are not subject to training, said computer system comprising:
∘ a processor 301,
∘ an input/output interface 303 connected to the processor to acquire test samples and to provide the test samples to the processor,
∘ at least one memory 302 connected to the processor, configured for storing said trained neural network and including instructions executable by the processor, the instructions comprising:
   ▪ presenting a test sample to the trained neural network,
   ▪ selecting, for said test sample, a value of at least one of said structural elements based on input or output values of a layer of the trained network,
   ▪ updating said trained neural network by applying said selected value of at least one of said structural elements to the trained neural network,
   ▪ evaluating an output of said updated trained neural network for said test sample.

According to a third aspect, the invention relates to a computer program product directly loadable into the memory of at least one computer, comprising software code instructions for performing, when said product is run on the computer, the steps of the methods described here before.

In addition to these features, the computer program according to the second aspect of the invention may be configured for performing or may comprise any other features described here before.

## Claims

1. A method for securing a trained neural network against adversarial attacks in a computer system (300),
wherein said neural network comprises an input layer, hidden layers and an output layer whose parameters are subject to training, and is defined by structural elements of the neural network, comprising functions and structural parameters, which are not subject to training,
the method comprising :
- programming (S1) the computer system with the trained neural network,
- presenting (S2), by the computer system, a test sample to the trained neural network,
- selecting a value (S3), for said test sample, of at least one of said structural elements based on input or output values of a layer of the trained network,
- updating (S4) said trained neural network by applying said selected value of at least one of said structural elements to the trained neural network,
- evaluating (S5) an output of said updated trained neural network for said test sample.

2. The method of claim 1, wherein selecting a value of at least one of said structural elements comprises :
• generating a selection value by applying a function exhibiting an avalanche effect to said input or output values of a layer of the trained network,
• selecting a value of at least one of said structural elements based on at least one bit of said selection value.

3. The method of the previous claim, wherein said function exhibiting an avalanche effect is a cryptographic hash function or a cryptographic encryption function.

4. The method of any one of claims 1 to 3, comprising generating said trained network by:
- initializing (T1) said neural network with random weight values,
- training (T2) said neural network using a plurality of training samples,
wherein for each training sample, a value of at least one of said structural elements is selected based on input or output values of a layer of the trained network.

5. The method of any one of claims 1 to 4, wherein the neural network is a convolutional neural network.

6. The method of any one of claims 1 to 5, wherein said neural network comprises a pooling layer combining together outputs of several neurons of a previous layer by applying to said outputs a pooling function among a plurality of pooling functions, and wherein selecting a value of at least one of said structural elements comprises selecting said pooling function of said pooling layer among said plurality of pooling functions.

7. The method of the previous claim, wherein said plurality of pooling functions comprises an average pooling method, a max pooling method and a MODE pooling method.

8. The method of any one of claims 1 to 7, wherein said value of at least one of said structural elements is selected based on input values to said input layer of the trained neural network.

9. The method of any one of claims 6 to 7, wherein said value of at least one of said structural elements is selected based on output values of a layer preceding in said trained neural network a layer at which the structural element is applied.

10. The method of any one of claims 1 to 9, wherein said neural network comprises applying an activation function to at least one node of said neural network, and wherein selecting a value of at least one of said structural elements comprises selecting said activation function among a plurality of activation functions.

11. The method of the previous claim, wherein said plurality of activation functions comprises: ReLu, SeLu, TanH, Sigmoid.

12. The method of any one of claims 1 to 11, wherein said neural network comprises a layer applying at least one dropout function, and wherein selecting a value of at least one of said structural elements comprises setting a value to a probability of said dropout function canceling at least one input to said layer.

13. The method of any one of claims 1 to 12, wherein said neural network comprises applying at least one batch normalization function, and wherein selecting a value of at least one of said structural elements comprises selecting said normalization function among a plurality of normalization functions.

14. The method of the previous claim, wherein said plurality of normalization functions comprises : L₀ norm, L₁ norm, L₂ norm and L_{∞} norm.

15. The method of any one of claims 1 to 14, wherein said test sample is an input image comprising a plurality of channels and wherein selecting a value of at least one of said structural elements comprises selecting the weight for each channel of the test sample.

16. A computer system (300) programmed with a trained neural network comprising an input layer, hidden layers and an output layer whose parameters are subject to training, and defined by structural elements of the neural network, comprising functions and structural parameters, which are not subject to training, said computer system comprising :
- a processor (301),
- an input/output interface (303) connected to the processor to acquire test samples and to provide the test samples to the processor,
- at least one memory (302) connected to the processor, configured for storing said trained neural network and including instructions executable by the processor, the instructions comprising:
• presenting a test sample to the trained neural network,
• selecting, for said test sample, a value of at least one of said structural elements based on input or output values of a layer of the trained network,
• updating said trained neural network by applying said selected value of at least one of said structural elements to the trained neural network,
• evaluating an output of said updated trained neural network for said test sample.

17. A computer program product directly loadable into the memory of at least one computer, comprising software code instructions for performing the steps of any one of claims 1 to 15 when said product is run on the computer.
